## Europäisches Patentamt

## European Patent Office

## Office européen des brevets

(19)

(11) Veröffentlichungsnummer: **0 102 018**
**B1**

(12) **EUROPÄISCHE PATENTSCHRIFT**

(45) Veröffentlichungstag der Patentschrift:
01.07.87

(51) Int. Cl.⁴: **B 22 D 39/00, H 02 K 44/06**

(21) Anmeldenummer: **83108014.8**

(22) Anmeldetag: **12.08.83**

(54) **Verfahren und Vorrichtung zur Förderung von Flüssigmetall.**

(30) Priorität: **26.08.82 DE 3231889**
**20.06.83 DE 3322122**

(43) Veröffentlichungstag der Anmeldung:
**07.03.84 Patentblatt 84/10**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**DE-A-2 637 473**
**DE-A-2 924 116**
**DE-A-3 141 774**
**DE-B-2 333 802**

(73) Patentinhaber: **INTERATOM Gesellschaft mit beschränkter Haftung, Friedrich- Ebert- Strasse, D-5060 Bergisch Gladbach 1 (DE)**

(72) Erfinder: **Rainer, Hans, Dipl.- Ing., An der Wolfsmaar 6, D-5060 Bergisch- Gladbach (DE)**
Erfinder: **Thissen, Klaus, Dipl.- Ing., Graeffstrasse 41, D-5000 Köln 30 (DE)**
Erfinder: **Barzantny, Joachim, Im Wiesengrund 42, D-5067 Kürten 1 (DE)**

(74) Vertreter: **Mehl, Ernst, Dipl.- Ing., Postfach 22 01 76, D-8000 München 22 (DE)**

EP 0 102 018 B1

## Beschreibung

Die vorliegende Erfindung betrifft eine Vorrichtung zur Förderung von Flüssigmetall, insbesondere von flüssigem Aluminium in Gießereianlagen. Aus der den Oberbegriff des Anspruchs 1 bildenden DE-A-29 24 116, der DE-A-31 41 774 und einem Vortrag von R. Hans auf dem deutschen Gießereitag in Koblenz am 15. und 16. Juni 1982 mit dem Thema "Neue elektromagnetische Pumpen für den Aluminiumguß" sind verschiedene Pumpentypen zur Förderung von Flüssigmetall bekannt. Dort wird einerseits eine Kanalpumpe und andererseits auch eine Tauchpumpe zur Förderung von Aluminium beschrieben. Während die Kanalpumpe größere Fördermengen bewältigen kann, hat sie den Nachteil, daß sie nicht selbstansaugend ist und daher zu Beginn des Gießvorganges zunächst mit flüssigem Metall gefüllt werden muß. Die Tauchpumpe ist zwar selbstansaugend, jedoch kann sie aufgrund von Temperaturproblemen keine so große Förderleistung erbringen wie eine Kanalpumpe.

Aufgabe der vorliegenden Erfindung ist die Schaffung einer Vorrichtung zur Förderung von Flüssigmetall mit einer elektromagnetischen Kanalpumpe, wobei die günstigen Eingenschaften der Kanalpumpe mit denen einer Tauchpumpe Kombiniert werden, wodurch sich eine selbstansaugende Fördereinrichtung mit großer Förderleistung bzw. gutem Dosierverhalten ergibt.

Zur Lösung dieser Aufgabe wird gemäß dem Hauptanspruch vorgeschlagen, eine elektromagnetische Tauchpumpe und eine elektromagnetische Kanalpumpe, wie sie an sich bekannt sind, hintereinander in Reihe anzuordnen. Dies hat zunächst den Vorteil, daß mit der Tauchpumpe die Kanalpumpe geflutet werden kann, so daß aufwendige Vorflutanlagen mechanischer Art, wie sie bisher für Kanalpumpen nötig waren, entfallen. Auf diese Weise können gleichzeitig auch einige Probleme vermieden werden, die bisher durch Temperaturschocks beim Fluten der Kanalpumpen zu beachten waren.

Es erscheint zunächst so, als würde die Pumpleistung von zwei in Reihe geschalteten Pumpen mehr durch die Leistung der schwächeren Pumpe in der Reihe bestimmt, jedoch trifft dies überraschenderweise bei elektromagnetischen Pumpen nicht zu. Da keinerlei Einbauten in dem Förderkanal vorhanden sind und die Förderung nur durch magnetische Wanderfelder vor sich geht, ist sehr wohl eine Tauchpumpe von kleiner Förderleistung aber mit einem relativ großen Kanalquerschnitt herstellbar. Die Förderleistung der Tauchpumpe wird nämlich nicht so sehr durch die möglichen Kanalquerschnitte begrenzt als vielmehr durch die maximal mögliche Verlustwärme in den Spulen und im Kern. Man kann daher eine Tauchpumpe bauen, welche einen Kanalquerschnitt hat, der in etwa dem einer Kanalpumpe entspricht. Durch eine solche über die optimale Größe hinausgehende Vergrößerung des Kanals der Tauchpumpe wird zwar deren Förderleistung verringert und die Verlustleistung in den Spulen und im Kern vergrößert, jedoch kann die Pumpe trotzdem kurzzeitig ohne Überhitzung Flüssigmetall fördern. Dies reicht jedoch vollkommen aus um die Kanalpumpe zu fluten. Ab diesem Zeitpunkt kann die Tauchpumpe dann ausgeschaltet werden, während die Kanalpump nunmehr die gesamte Förderung übernimmt. Der Pumpkanal der Tauchpumpe dient dann nur noch als Förderleitung.

Im Anspruch 2 wird dementsprechend vorgeschlagen, daß die Förderleistung der Kanalpumpe erheblich größer ist als die der Tauchpumpe. In dieser Zusammenstellung wird die Verwendung von zwei Pumpen, die gegenüber der Verwendung einer einfachen Tauchpumpe natürlich sehr aufwendig ist, wirtschaftlich besonders sinnvoll. Tatsächlich bestimmt nunmehr nur noch die Förderleistung der Kanalpumpe die Eigenschaften während des Dauerbetriebes, wohingegen die Tauchpumpe nur noch zum Fluten der nicht selbstansaugenden Kanalpumpe verwendet wird.

Im Anspruch 3 wird in weiterer Ausgestaltung der Erfindung vorgeschlagen, die Tauchpumpe überhaupt nur noch für einen kurzzeitigen Betrieb auszulegen, insbesondere bei der Tauchpumpe keine Kühlung und wirkungsgraderhöhende aufwendige Einrichtungen mehr vorzunehmen. Ein ganzer Teil der Probleme, welche bei Tauchpumpen zu beachten sind, treten überhaupt nur im Dauereinsatz auf. Bei längerem Betrieb einer Tauchpumpe werden nämlich die Spulen und der Kern erheblich heißer als das geförderte flüssige Metall, wobei einerseits Probleme mit dem Curie-Punkt der magnetischen Materialien und andererseits Oxidationsprobleme bei Kupferspulen auftreten. Dies alles ist bei einem kurzzeitigen Betrieb unbeachtlich, so daß verschiedene Maßnahmen für kurzzeitbetriebene Tauchpumpen entfallen können, so z. B. eine Spülung mit Inert- oder Kühlgas und die Verwendung von teuren Materialien mit besonders hohem Curie-Punkt.

Im Anspruch 4 wird entsprechend den Ausführungen zum Anspruch 1 ein Verfahren zum Fördern von Flüssigmetall vorgeschlagen, bei dem die selbstansaugende Tauchpumpe nur zu Beginn der Förderung betrieben wird, bis die nicht selbstansaugende Kanalpumpe geflutet ist und die weitere Förderung dann ausschließlich mit der Kanalpumpe erfolgt. Dies Verfahren vermeidet die bisher übliche mechanische Flutung der Kanalpumpe aus einem Gießgefäß mit den Problemen des Temperaturschocks und anderer Nachteile. Bei Verwendung der vorgeschlagenen Kombination braucht der Vorratsbehälter für Flüssigmetall nicht für Schöpfeinrichtungen zugänglich zu sein, bzw. das Nachfüllen braucht nicht durch die Kanalpumpe zu erfolgen.

Im Anspruch 5 wird in weiterer Ausgestaltung vorgeschlagen, daß die Regelung der Förderleistung im Betrieb ausschließlich durch die Kanalpumpe in an sich bekannter Weise erfolgt. Nach dem Fluten der Kanalpumpe kann daher die Tauchpumpe vollkommen ausgeschaltet werden, wodurch die Temperatur des ganzen Systems der Tauchpumpe in etwa der Schmelzentemperatur entspricht. Die Regelung der Förderleistung, beispielsweise zur präzisen Portionierung des geförderten Flüssigmetalls erfolgt nur durch die Kanalpumpe, so daß das vorgeschlagene System nicht schwieriger zu handhaben ist als die bekannten Einzelsysteme.

Im Anspruch 6 wird ein anderes Verfahren zum Fördern von Flüssigmetall mit der beschriebenen Vorrichtung vorgeschlagen. Danach wird die Tauchpumpe ständig mit kleiner Förderleistung betrieben und die Dosierung und/oder Regelung des Flüssigmetallstromes erfolgt durch Zu- oder Gegenschalten der Kanalpumpe. Dieses Verfahren hat entscheidende Vorteile, wenn nicht nur die kontinuierliche Fördermenge geregelt werden soll, sondern ein präzises Dosieren nötig ist. Fördert die Tauchpumpe mit kleiner Förderleistung, so kann der Flüssigmetallstrom durch Gegenschalten der Kanalpumpe fast schlagartig gestoppt werden. Der Flüssigmetallspiegel nimmt je nach der gegengeschalteten Leistung der Kanalpumpe irgendeine Position im Inneren der Kanalpumpe ein. Durch genaue Festlegung von Förderleistung der Tauchpumpe und Gegenförderleistung der Kanalpumpe kann der Flüssigmetallspiegel während des Stillstandes genau in eine definierte Position gebracht werden. Beim Fördern der nächsten Portion wird die Kanalpumpe dann wieder für eine bestimmte Zeit mit einer bestimmten Leistung gleichsinnig zu der Tauchpumpe geschaltet. In günstigen Fällen ist so eine sehr genaue Portionierung lediglich durch intervallweises Zu- bzw. Gegenschalten der Kanalpumpe mit festgelegter Leistung möglich, ohne daß es einer aufwendigen Instrumentierung und Regelung bedarf.

In spezieller Ausgestaltung der Erfindung wird im Anspruch 7 vorgeschlagen, daß die Förderleistung der Tauchpumpe so geregelt wird, daß der Flüssigmetalldruck bei Förderstillstand am Eingang der Kanalpumpe immer gleich groß ist. Da der Flüssigmetallspiegel im Behälter nicht konstant bleibt und die Förderleistung der Tauchpumpe von der Füllhöhe im Behälter abhängt, ist zur Erreichung eines definierten Flüssigmetallspiegels bei Förderstillstand vorteilhaft, wenn dies durch die Tauchpumpe bereits ausgeglichen wird. Dann benötigt die Kanalpumpe keine weiteren aufwendigen Regelvorrichtungen zur gleichbleibend genauen Dosierung. Die Regelung der Förderleistung der Tauchpumpe erfolgt in Abhängigkeit vom Füllstand im Behälter und, falls nötig, von Temperatur und anderen Parametern, die gemessen werden können.

Die vorgeschlagene Anordnung eignet sich besonders für Gießanlagen, in denen große Förderleistungen erbracht werden müssen. Außerdem ist ein Einsatz von Tauchpumpen unter diesen Bedingungen auch bei Flüssigmetallen mit einer höheren Schmelztemperatur als beim Aluminium denkbar, da die Probleme der Tauchpumpe hauptsächlich im Langzeitleistungsbetrieb liegen. Eine Tauchpumpe, die für Aluminium im Dauereinsatz geeignet ist, kann kurzzeitig auch für Metalle mit sehr viel höheren Schmelzpunkten eingesetzt werden.

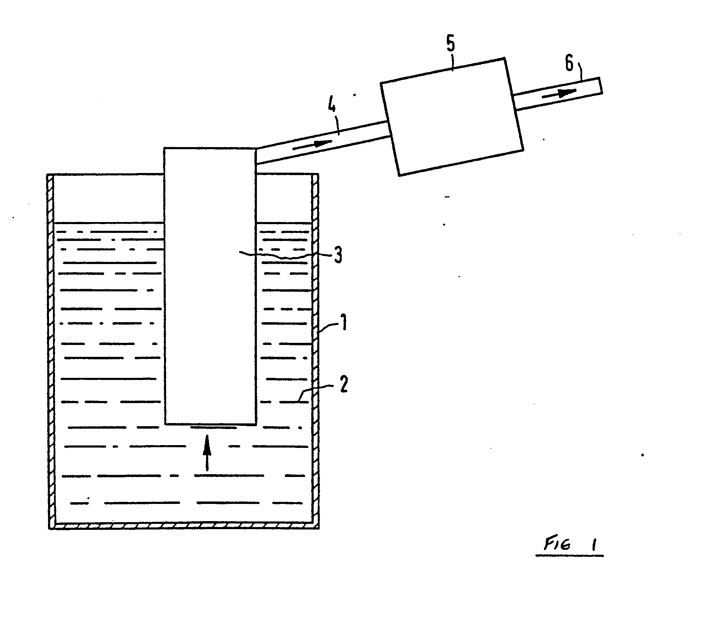

Ein Ausführungsbeispiel der Erfindung ist schematisch in der Zeichnung dargestellt:

In einem Behälter 1 befindet sich eine Flüssigmetallschmelze 2, in welche eine elektromagnetische Tauchpumpe 3 eingetaucht ist. Wie mit Pfeilen angedeutet ist, wird das flüssige Metall durch die Tauchpumpe hindurch und über einen Förderkanal 4 zu einer Kanalpumpe 5 geleitet, von welcher es dann zu einem Ausflußrohr 6 gelangt. Der Förderkanal 4 verläuft zur Vermeidung des Nachtropfens von Flüssigmetall etwas schräg aufwärts, was zusätzlich für ein eventuelles Gegenschalten der Kanalpumpe gegen die Tauchpumpe von Bedeutung ist. Der Beginn des Förderns kann von der Tauchpumpe 3 bewerkstelligt werden, während ab dem Zeitpunkt, zu dem die Kanalpumpe 5 geflutet ist, die Förderung allein von dieser Pumpe erfolgt. Das bisher notwendige Fluten der Kanalpumpe von außen, unter Umständen in Verbindung mit dem Nachfüllen des Behälters 1, ist nunmehr überflüssig.

**Patentansprüche**

1. Vorrichtung zur Förderung von Flüssigmetall mit einer elektromagnetischen Kanalpumpe, dadurch gekennzeichnet, daß dieser Kanalpumpe (5) eine in die Flüssigmetallschmelze (2) getauchte, an sich bekannte, elektromagnetische Tauchpumpe (3) vorgeordnet ist.

2. Vorrichtung nach Anspruch 1, dadurch gekennzeichnet, daß die Förderleistung der Kanalpumpe (5) erheblich größer ist als die der Tauchpumpe (3).

3. Vorrichtung nach Anspruch 1 oder 2, dadurch gekennzeichnet, daß die Tauchpumpe (3) nur für kurzzeitigen Betrieb ausgelegt ist, insbesondere daß bei der Tauchpumpe keine Kühlung und wirkungsgraderhöhende Einrichtungen vorgesehen sind.

4. Verfahren zum Fördern von Flüssigmetall mit einer elektromagnetischen Kanalpumpe, dadurch gekennzeichnet, daß diese Kanalpumpe (5) zu Beginn der Förderung als nicht selbstansaugende Pumpe durch den Betrieb einer vorgeschalteten Tauchpumpe (3) geflutet wird und die weitere Förderung ausschließlich mit der Kanalpumpe (5) erfolgt.

5. Verfahren nach Anspruch 4, dadurch gekennzeichnet, daß die Regelung der Förderleistung ausschließlich durch die Kanalpumpe (5) in an sich bekannter Weise erfolgt.

6. Verfahren zum Fördern von Flüssigmetall mit einer elektromagnetischen Kanalpumpe, dadurch gekennzeichnet, daß dieser Kanalpumpe (5) eine Tauchpumpe (3) vorgeschaltet ist, die ständig mit kleiner Förderleistung betrieben wird, und die Dosierung und/oder Regelung des Flüssigmetallstromes durch Zu- oder Gegenschalten der Kanalpumpe (5) erfolgt.

7. Verfahren nach Anspruch 6, dadurch gekennzeichnet, daß die Förderleistung der Tauchpumpe (3) so geregelt wird, daß der Flüssigmetalldruck bei Förderstillstand am Eingang der Kanalpumpe (5) immer gleich groß ist.

**Claims**

1. A device for conveying molten metal having an electromagnetic channel pump, characterised in that this channel pump (5) is preceded by an electromagnetic immersion pump (3) which is known per se and is immersed in the molten metal bath (2).

2. A device as claimed in Claim 1, characterised in that the conveying performance of the channel pump (5) is considerably greater than that of the immersion pump (3).

3. A device as claimed in Claim 1 or 2, characterised in that the immersion pump (3) is designed only for short-term operation, in particular but not exclusively in that the immersion pump is provided with no cooling and efficiency-increasing arrangements.

4. A method of conveying molten metal using an electromagnetic channel pump, characterised in that at the beginning of the conveying process this channel pump (5), as a non-self priming pump, is flooded by the operation of a preceding immersion pump (3) and the remainder of the conveying process is carried out exclusively with the channel pump (5).

5. A method as claimed in Claim 4, characterised in that the regulation of the conveying performance is carried out exclusively by the channel pump (5) in a manner known per se.

6. A method of conveying molten metal using an electromagnetic channel pump, characterised in that this channel pump (5) is preceded by an immersion pump (3) which is operated continuously at a low conveying performance, and the dosing and/or regulation of the molten metal flow is effected by switching the channel pump (5) forwards or backwards.

7. A process as claimed in Claim 6, characterised in that the conveying performance of the immersion pump (3) is so regulated that when the conveyance is at a standstill, the molten metal pressure at the input of the channel pump (5) is always the same.

**Revendications**

1. Dispositif pour le transport d'un métal liquide compranant une pompe élactromagnétique à canal, caractérisé en ce qu'en amont de cette pompe à canal (5) est montée une pompe électromagnétique immergée (3), en soi connue, immergée dans le bain de métal liquide (2).

2. Dispositif suivant la revendication 1, caractérisé en ce que le débit de la pompe à canal (5) est considérablement plus grand que celui de la pompe immergée (3).

3. Dispositif suivant la revendication 1 ou 2, caractérisé en ce que la pompe immergée (3) n'est conçue que pour un fonctionnement de brève durée et en ce que, notamment, il n'est pas prévu sur la pompe immergée de refroidissement et de dispositif augmentant le rendement.

4. Procédé de transport de métal liquide par une pompe électromagnétique à canal, caractérisé en ce qu'il consiste à emplir cette pompe à canal (5), au début du transport sous la forme d'une pompe qui n'est pas auto-amorçante, en faisant fonctionner une pompe immergée (3) montée en amont, et à effectuer le reste du transport exclusivement par la pompe à canal (5).

5. Procédé suivant la revendication 4, caractérisé en ce qu'il consiste à effectuer le réglage du débit, d'une manière en soi connue, exclusivement par la pompe à canal (5).

6. Procédé de transport de métal liquide par une pompe électromagnétique à canal, caractérisé en ce qu'il consiste à monter, en amont de cette pompe à canal (5), une pompe immergée (3) qui fonctionne constamment à un petit débit, et à effectuer le dosage et/ou le réglage du courant de métal liquide en montant la pompe à canal (5) dans le même sens ou en opposition.

7. Procédé suivant la revendication 6, caractérisé en ce qu'il consiste à régler le débit de la pompe immergée (3) de manière que la pression du métal liquide ait toujours la même valeur à l'entrée de la pompe à canal (5), lors de l'arrêt du transport.

FIG 1